# EUROPÄISCHE PATENTSCHRIFT

(11) **EP 3 580 052 B1**
(45) Veröffentlichungstag und Bekanntmachung des Hinweises auf die Patenterteilung: **30.11.2022**
(21) Anmeldenummer: 18704233.8
(22) Anmeldetag: 08.02.2018
(51) Int. Cl.: B29C 70/86, B29C 70/54, B29C 70/34, B61D 17/04, F16B 5/00, F16B 35/02, F16B 35/04

(54) **VERBINDUNGSELEMENT ZUR ANBINDUNG EINES BAUTEILS AN EINE FASERVERBUNDSTRUKTUR**
CONNECTING ELEMENT FOR ATTACHING A COMPONENT TO A FIBER COMPOSITE STRUCTURE
ÉLÉMENT DE LIAISON POUR RELIER UN ÉLÉMENT STRUCTURAL À UNE STRUCTURE COMPOSITE RENFORCÉE PAR FIBRES

(30) Priorität: 09.02.2017 DE 102017102562
(43) Veröffentlichungstag der Anmeldung: 18.12.2019
(73) Patentinhaber: CRRC Qingdao Sifang Co., Ltd., Qingdao City, Shandong 266111 (CN); CG Rail - Chinesisch-Deutsches Forschungs - Und Entwicklungszentrum Für Bahn - Und Verkehrstechnik Dresden GmbH, 01067 Dresden (DE)
(72) Erfinder: MA, Yunshuang, Qingdao Shandong 266111 (CN); CHEN, Shuxiang, Qingdao Shandong 266111 (CN); TAI, Yongfeng, Qingdao Shandong 266111 (CN); JIAO, Jinghai, Qingdao Shandong 266111 (CN); SONG, Zhengyu, Qingdao Shandong 266111 (CN); HE, Jiajie, Qingdao Shandong 266111 (CN); HUFENBACH, Werner, 01324 Dresden (DE); ULBRICHT, Andreas, 01324 Dresden (DE)
(74) Vertreter: Prinz & Partner mbB
(86) Internationale Anmeldenummer: PCT/EP2018/053216
(87) Internationale Veröffentlichungsnummer: WO 2018/146218

(56) Entgegenhaltungen:
- EP-A1- 0 399 210
- WO-A1-2010/029188
- CN-Y- 2 735 004
- DE-A1- 19 725 905
- DE-A1-102015 106 563
- FR-A1- 2 834 926

## Beschreibung

Gegenstand der vorliegenden Erfindung ist ein Verbindungselement, mit dem ein Verbindungsbauteil mit einer Faserverbundstruktur, insbesondere einer speziellen Ringankerstruktur aus Faserverbundwerkstoff, verbunden werden kann. Der Ringanker ist Teil der Konstruktion eines Kopfmoduls (der Kabine) für ein Schienenfahrzeug, und soll im Crash-Fall dazu beitragen, die auftretenden Lasten abzubauen und zu verteilen.

Insbesondere handelt es sich bei dem Kopfmodul um eine Konstruktion für Nahverkehrszüge, insbesondere U-Bahnen. Bei derartigen Zügen ist das Kopfmodul häufig in den Wagen integriert. Das Kopfmodul wird im Weiteren auch als Kabine bezeichnet.

Im Interesse der Material- und Energieeffizienz hat sich in den letzten Jahren der Einsatz leichter Materialien und der Prinzipien des Leichtbaus im Schienenfahrzeugbau immer weiter durchgesetzt. Insbesondere die Verwendung von Faserverbundmaterialien nimmt immer mehr zu. Auch für die Gestaltung der Kopfmodule von Schienenfahrzeugen trifft dies zu.

Bekannte Konstruktionen sehen hier vor, vorgefertigte Module auf die Unterkonstruktion, die den gesamten Wagen ohne Unterbrechung durchzieht, aufzusetzen.

So ist Gegenstand der DE 197 25 905 ein Verbindungsverfahren eines vorgefertigten Kopfmoduls aus faserverstärktem Kunststoff (FKV) mit dem Untergestell und dem Wagenkastenmodul. Die Seitenwände des Kopfmoduls sind vorzugsweise als Sandwichstruktur aus FKV mit einem zwischenliegenden Kernmaterial gefertigt. Zum Einsatz kommen hier spezielle Verstärkungsprofile in den Fügebereichen des Kopfmoduls, die die Kraftübertragung zwischen Untergestell bzw. Wagenmodul und den FKV-Wänden des Kopfmoduls verbessern. Eine spezielle Gestaltung der Faserführung der FKV-Verstärkung ist nicht vorgesehen. Die Verstärkungsprofile sind in den Kern der FKV-Wände des Kopfmoduls integriert und wirken als Widerlager für die Bolzenverbindung zwischen FKV-Wänden des Kopfmoduls und Untergestell bzw. Wagenkastenmodul. Nachteilig ist hierbei, dass die Verstärkungsfasermaterialien zwischen dem Verstärkungsprofil und dem Untergestell einer Druckbelastung ausgesetzt ist und so die Gefahr einer kriechbedingten Schädigung des FKV-Materials in diesem Bereich besteht.

In der WO 2010/029188 A1 wird ein selbstragender Fahrzeugkopf offenbart, der vorrangig aus Faserverbundmaterial aufgebaut ist. Der Fahrzeugkopf weist Strukturelemente auf, die dem Energieverzehr im Crashfalle dienen sowie sonstige Strukturelemente, die keine spezielle Funktion zum Energieabbau haben. Insbesondere sollen auch die energieverzehrenden Strukturelemente aus Faserverbundwerkstoff bestehen. Weiterhin ist vorgesehen, dass eine Reihe von energieabbauenden Strukturelementen nacheinander zum Energieverzehr beiträgt bzw. entsprechende Kräfte überträgt. Der Fahrzeugkopf weist eine Mittelpufferkupplung auf, die bauartbedingt vor der Front der Verkleidung des Fahrzeugkopfes liegt. Daher ist der Mittelpufferkupplung unmittelbar ein Energieverzehrelement nachgeordnet, das auf diese ausgeübte Stöße absorbieren soll. Darüber hinaus sind parallel dazu zwei seitliche Energieverzehrelemente angeordnet, die als Aufkletterschutz wirken sollen. Des Weiteren weist die Brüstung unterhalb des Frontfensters mindestens ein, bevorzugt zwei Energieverzehrelemente auf. Von der Brüstung führen auf jeder Seite des Kopfteils zwei Stränge zur Energieübertragung in die Unterkonstruktion des Wagenteils. Darüber hinaus sind den beiden A-Säulen in Bewegungsrichtung zwei Energieverzehrelemente vorgelagert. Die Druckschrift bleibt eine Lehre, wie die Vielzahl der unterschiedlichen Elemente, auch mit metallischen Bauteilen zu verbinden sind, schuldig.

Aus der DE 37 15 409 A1 ist es bekannt, für den Fall, dass metallische Verbindungselemente durch Faserlagen von Faserverbundwerkstoffen hindurch geführt werden sollen, einen Dorn zu verwenden, der durch seine spitze Form die Verdrängung der Fasern vornimmt, woraufhin die Verbindungselemente (Schrauben, Bolzen) leicht durch die einmal geschaffenen Öffnungen geführt werden können. Bei diesem Vorgehen ist der Dorn als getrennt ausgebildetes Werkzeug ausgeführt, was es erfordert, nach dem erstmaligen Verdrängen der Fasern, den Dorn zu entnehmen. Dadurch können Fasern zurück an die alte Position rutschen, wodurch das Einführen der Verbindungselemente erschwert oder sogar verhindert werden kann. Dies trifft insbesondere für Verbindungselemente mit relativ großem Querschnitt zu.

In der DE 10 2015 106 563 A1 wird ein Verfahren zum Verbinden von FKV-Strukturbauteilen, speziell Luftfahrzeugstrukturbauteilen, offenbart. Die zu verbindenden Strukturbauteile werden zur leichteren Durchdringung der Matrix erwärmt und dann mittels einer Befestigungsvorrichtung durchdrungen und verbunden. Die Befestigungsvorrichtung weist einen Kopf, einen Körper und eine Spitze auf, die abnehmbar gestaltet sein kann. Die Befestigungsvorrichtungen weisen nachteilig keinerlei Mittel auf, mittels derer verhindert werden kann, dass sie beim Durchdringen an Fasern hängen bleiben und somit Beschädigungen verursachen.

Aus der CN 2 735 004 Y ist ein Verbindungselement bekannt, das eine schrauben- oder bolzenartige Form hat.

Die EP 0 399 210 A1 zeigt ein Befestigungselement zur Befestigung von plattenartigem Wärmeisoliermaterial auf einem einschraubfähigen Untergrund.

Die Fahrerkabine ist vorzugsweise als zweischalige Konstruktion ausgebildet. Die äußere Schale ist mit den drei Systemen, die im Crash-Falle die Stoßenergie in Verformung umwandeln, verbunden. Die innere Schale kleidet den eigentlichen, von Menschen nutzbaren, Innenraum aus. Beide Schalen sind als Faserverbundstrukturen ausgebildet, die keine wesentlichen Beiträge zur Crash-Resistenz liefern. Die äußere Schale gewährleistet die notwendige Steifigkeit der Konstruktion, indem sie als mehrlagige Faserverbundstruktur, optional mit zwischen den Faserschichten liegenden Kernen, realisiert ist. In den Faserschichten können gelegte, gewickelte oder geflochtene Fasergebilde eingesetzt werden. Zur Verbesserung der Steifigkeit sind auch UD-Faserstränge (unidirektionale Faserstränge) möglich. Vorteilhaft ist, dass die A-Säulen der äußeren Kabine keine speziellen Verstärkungen für die Kraftübertragung im Crash-Falle aufweisen. Dies verhindert, dass im Crash-Fall eine nachteilige Kraftübertragung auf den Ringanker erfolgt bzw. diese zumindest begrenzt wird. Bevorzugt sind die A-Säulen der äußeren Kabine zur Durchführung elektrischer Leitungen ausgestaltet. Die äußere Kabinenschale wird vorzugsweise aus Fasergelegen aufgebaut, die anschließend mit einem Matrixwerkstroff getränkt und konsolidiert werden. Auch der Aufbau aus bereits mit Matrixwerkstoff getränkten Fasergelegen ist möglich. Eine Verbindung der äußeren mit der inneren Schale erfolgt bevorzugt im Bereich der Frontscheibe. Hier sind die beiden Schalen miteinander verschraubt, verklebt oder in sonstiger Weise verbunden.

Eine besondere Bedeutung kommt dem Ringanker zu. Der Ringanker weist eine U-Form auf, bei der die beiden Enden des Ringankers an den oberen Längsträgern des nachfolgenden Wagenteils befestigt sind. Die Stirnfläche des Ringankers (entspricht der unteren Krümmung der U-Form) ist an der Innenseite der oberen Stirnseite der äußeren Kabinenschale angeordnet. Der Ringanker ist bevorzugt als Faserverbundbauteil ausgeführt. Dabei werden für den Ringanker UD-Faserlagen, die über die gesamte Länge des Ringankers, von einem Befestigungspunkt an einem oberen Längsträger des nachfolgenden Wagenteils zum anderen Befestigungspunkt an dem anderen oberen Längsträger des nachfolgenden Wagenteils verlaufen, genutzt. Diese UD-Faserlagen können alternierend mit Faserlagen eingesetzt werden, die abweichende Faserorientierungen aufweisen können. Bevorzugt sind Faserlagen aus Geweben. Insbesondere werden Faserlagen mit abweichenden Orientierungen bzw. Gewebe oder Geflechte genutzt, um die UD-Fasern vor dem Konsolidieren in ihrer Lage zu fixieren. Insbesondere werden bevorzugt Kohlefaserverbundmaterialien genutzt.

Die Verbindung der Enden des Ringankers zu den oberen Längsträgern des nachfolgenden Wagenteils wird bevorzugt durch Verbindungsstücke realisiert. Diese Verbindungsstücke unterstützen die Verbindung mit oberen Längsträgern des nachfolgenden Wagenteils indem sie bei hinreichender Festigkeit die notwendigen Öffnungen für die Montage (bevorzugt Verschraubung) zur Verfügung stellen. Bei diesen Öffnungen handelt es sich insbesondere um ein Schraubenöffnung bzw. mehrere Schraubenöffnungen je Ringankerende zu korrespondierenden Öffnungen in den oberen Längsträgern des nachfolgenden Wagenteils. Darüber hinaus sind optional Öffnungen vorgesehen, durch die Verbindungsbolzen bzw. Muttern, Schrauben oder Ähnliches in die Öffnungen eingeführt und ggf. bei Verschraubungen gegengehalten werden können.

Die Verbindungstücke müssen somit sowohl im Normalbetrieb als auch im Crash-Falle große Kräfte übertragen können.

Konventionelle Verfahren zur Anbindung der Verbindungsstücke an die Ringankerenden sehen vor, dass der bereits konsolidierte Ringanker mit Bohrungen versehen wird, durch die dann die Bolzen oder Schraubverbindungen, die die Verbindungsstücke an den Enden des Ringankers halten, geführt werden. Nachteilig an diesem Vorgehen ist, dass bei der Bohrung die Faserstruktur im Ringanker beschädigt wird. Darüber hinaus müssen die metallischen Bolzen bzw. Schrauben, die das Verbindungsstück halten sollen, gegen direkten Kontakt mit den offenen Enden der Kohlefaserverstärkungsmaterialien geschützt werden. Andernfalls könnte elektrochemische Korrosion die Bolzen oder Schrauben schwächen bzw. zerstören.

Es stellt sich somit im Allgemeinen die Aufgabe, Verbindungselemente vorzuschlagen, die die Montage von Bauteilen, vorzugsweise metallischen Bauteilen, an Faserverbundbauteilen, insbesondere an Kohlefaserverbundbauteilen erleichtern. Im engeren Sinne gilt es, Verbindungselemente vorzuschlagen, mit denen die Verbindungsstücke an den Enden des Ringankers fixiert werden können, die die genannten Nachteile vermeiden. Die Verbindungsstücke sind dabei vorzugsweise metallisch, besonders bevorzugt aus Edelstahl oder Titan. Prinzipiell können die vorgeschlagenen Verbindungselemente aber auch zur Anbindung von Bauteilen bzw. Verbindungsstücken aus anderen Materialien genutzt werden.

Erfindungsgemäß wird die Aufgabe mit einem Verbindungselement nach Anspruch 1 gelöst. Weiterhin wird die Aufgabe der Erfindung durch eine Verbindungsstruktur nach Anspruch 2 gelöst. Vorteilhafte Ausführungsformen des Verbindungselementes sowie der Verbindungsstruktur sind in den rückbezogenen Unteransprüchen offenbart. Eine Verwendung der erfindungsgemäßen Verbindungsstruktur ist in Anspruch 7 offenbart. Verwendungen des erfindungsgemäßen Verbindungselementes sind in den Ansprüchen 10, 11 und 12 offenbart.

Vorzugsweise wird der Ringanker gemeinsam mit der äußeren Kabinenschale gefertigt. Dabei wird ein Ringanker-Formteil, dass bereits die Faserverstärkungsstruktur des Ringankers aufweist, in die Form eingelegt, in der die äußere Kabinenschale gefertigt wird. Anschließend werden die Faserlagen des Ringankers und der äußeren Kabinenschale gemeinsam mit Matrixmaterial getränkt und dieses anschließend konsolidiert (das Matrixmaterial ausgehärtet). Es ist auch möglich, das Ringanker-Formteil bereits mit Matrixmaterial zu tränken und anschließend in die Form einzulegen bzw. auf eine Trägerkonstruktion aufzulegen, auf die dann die weiteren Faserlagen der äußeren Schale, ebenfalls als vorgetränkte Faserlagen (bspw. als Prepregs) aufgelegt werden. Auch hier wird anschließend konsolidiert.

Eine weitere bevorzugte Ausführungsform sieht vor, die äußere Kabinenschale und den Ringanker als unabhängige Bauteile zu fertigen und den konsolidierten Ringanker in die konsolidierte äußere Kabinenschale einzubringen und dort zu fixieren, vorzugsweise einzukleben.

In noch einer weiteren bevorzugten Ausführungsform wird die Faserverstärkungsstruktur des Ringankers in der Form lagenweise aus Faserverstärkungslagen aufgebaut.

Der Ringanker besteht aus mehreren Lagen von Verstärkungsfasern. Dabei kommen sowohl Lagen unidirektionaler Fasern (UD-Lagen) als auch geflochtene oder bidirektional gelegt Lagen zum Einsatz. Die unterschiedlichen Lagen wechseln vorteilhaft einander ab. Insbesondere ist es vorteilhaft, einen Kern mit UD-Fasern, mit einer geflochtenen oder gewickelten äußeren Hülle, die die Form des Ringankers bestimmt, zu umgeben. Vorteilhaft können auch Gelege aus Rovings oder Prepregs als äußere Hülle genutzt werden. Vorzugsweise sind die einzelnen Lagen des Ringankers miteinander verbunden. Dies kann durch Vernähen, Stricken oder Klemmen passieren. Auch die Verwendung von Kunststoffverbindern ist möglich.

Um das nachteilige Durchbohren des konsolidierten Faserverbundmaterials an den Enden des konsolidierten Ringankers zu vermeiden, werden die Bolzen bzw. Schrauben im trockenen oder im nassen (mit Matrixmaterial getränkten) unkonsolidierten Zustand des Matrixmaterials an den vorgesehenen Stellen vorrichtungsgebunden oder frei positioniert und durch die Verstärkungsfaserstruktur hindurchgeführt, wobei die Fasern verdrängt, jedoch nicht beschädigt werden.

In einer ersten Ausführungsform ist das Verbindungsstück einteilig gestaltet, so dass es das Ende des Ringankers vollständig umgibt und durch Bolzen oder Schrauben gehalten wird, die die Enden des Ringankers vollständig durchdringen.

In einer weiteren Ausführungsform ist das Verbindungsstück mehrteilig, bevorzugt zweiteilig ausgeführt. Insbesondere bevorzugt ist eine zweiteilige Ausführung, bei der das Ende des Ringankers zwischen zwei halbschalenförmig ausgebildeten Teilen des Verbindungsstücks gehalten wird. Die beiden Teile des Verbindungsstücks sind dabei einander gegenüberliegend an einem Ende des Ringankers angeordnet.

In einer dritten Ausführungsform ist das Verbindungsstück ein- oder mehrteilig ausgeführt, zeichnet sich jedoch dadurch aus, dass es das Ende des Ringankers nicht vollständig umschließt. Die Bolzen oder Verbindungsschrauben sind auf einer Seite in Unterlegscheiben oder Unterlegstücke auf der Oberfläche des Ringankermaterials und auf der anderen Seite durch das Material des Verbindungsstückes gelagert.

In einer ersten bevorzugten Verfahrensweise ist vorgesehen, das Verstärkungsfasermaterial in der angestrebten Form in trockenem oder im unkonsolidierten matrixmaterialgetränkten Zustand bereit zu stellen. Dies erfolgt, indem der Ringanker (als Abfolge von Lagen) in eine Form eingelegt wird und die Verbindungsstücke auf den Ringanker aufgelegt und anschließend die erfindungsgemäßen metallischen Verbindungselemente, wie Bolzen oder Schrauben, durch die Verstärkungsfaserlagen hindurchgedrängt werden. Alternativ können zuerst die Verbindungsstücke in die Form eingelegt und anschließend der unkonsolidierte Ringanker eingebracht werden. Ein weiterer Vorteil besteht darin, dass die Verbindungselemente und die Fügepartner in gemeinsamer Form angeordnet werden. Dies verhindert vorteilhaft ein lokales Verkippen, und das Laminat ist vor einer Zerstörung durch verschiebungsinduzierte lokale Lochleibung geschützt. Um eine sowohl absolute als auch relative Positionierung sicher zu stellen, können die Verbindungselemente optional auf einer Trägerplatte vorpositioniert werden. Beim Durchdringen der Faserlagen erfolgt vorteilhaft keine Beschädigung von Fasern. Anschließend kann das Verstärkungsfasermaterial der äußeren Gehäuseschale über dem Ringanker aufgebracht und ein gemeinsames Tränken mit Matrixmaterial bzw., wenn alle Fasermaterialien bereits getränkt sind, das Konsolidieren erfolgen. Vorteilhaft werden so die metallischen Verbindungselemente in die Matrix eingebunden und es entsteht kein Spalt, wie er beim Bohren nach bisherigen Verfahren zu erwarten ist. Es können daher keine korrosiven Medien in einen derartigen Spalt eindringen. Nach dem Konsolidieren ist der Ringanker, ausschließlich über das Matrixmaterial, stoffschlüssig mit der äußeren Gehäuseschale verbunden. Abschließend können äußere Gehäuseschale und Ringanker in einem Stück aus der Form entnommen werden.

In einer zweiten bevorzugten Verfahrensweise wird das Verstärkungsfasermaterial des Ringankers in einer eigenen Form in trockenem oder im unkonsolidierten matrixmaterialgetränkten Zustand bereitgestellt. Anschließend werden die erfindungsgemäßen Bolzen oder Schrauben durch die Verstärkungsfaserlagen hindurchgedrängt und die Verbindungsstücke installiert. Auch dies erfolgt vorteilhaft ohne Beschädigung der Fasern des Verstärkungsfasermaterials. Danach kann das Verstärkungsfasermaterial, falls es im trockenen Zustand bereitgestellt wurde, mit Matrixmaterial getränkt werden. Anschließend kann in beiden Fällen (trocken oder getränkt bereitgestelltes Verstärkungsfasermaterial) der vorbereitete Ringanker entnommen und in die Form zur Herstellung der äußeren Schale eingelegt werden. Anschließend erfolgt die Weiterverarbeitung wie in der ersten bevorzugten Verfahrensweise.

Eine dritte bevorzugte Verfahrensweise sieht vor, entsprechend der zweiten bevorzugten Verfahrensweise vorzugehen, jedoch das getränkte Verstärkungsfasermaterial nach dem Anbringen der Verbindungsstücke teilzukonsolidieren und erst danach in die Form zur Herstellung der äußeren Schale zu überführen.

Die erfindungsgemäßen Verbindungselemente (bspw. als Bolzen bzw. Schrauben) können als einzelne Bauteile oder an einem Teil des Verbindungsstücks fixiert (bspw. aufgeschweißt, geklebt) bereitgestellt werden. Sie bestehen bevorzugt aus metallischen Werkstoffen, besonders bevorzugt aus Stahl. Für Aufgabenstellungen, die andere Anforderungen an Festigkeit und Korrosionsbeständigkeit stellen, können die Verbindungselemente jedoch auch aus anderen Materialien, bspw. Kunststoff, FKV, Keramik etc. bestehen.

Die Verbindungselemente werden im Zuge einer bevorzugten Variante des Verfahrens durch die dafür vorgesehenen Öffnungen der Verbindungsstücke und die Faserlagen hindurchgeführt. Nach dem Konsolidieren des Ringankers werden vorzugsweise Unterlegstücke (-scheiben) oder ein weiteres Teilstück der Verbindungsstücke auf das jeweilige konsolidierte Ende des Ringankers aufgebracht und dort fixiert. Dies erfolgt bspw. durch Verschrauben oder Vernieten der Enden der Verbindungselemente. In jeder Ausführungsform durchdringen die Verbindungselemente den Ringanker vollständig.

Die Verbindungselemente als einzelne Bauteile weisen einen Kopf und einen stabförmigen, längserstreckten Körper auf, der einen geringeren Querschnitt als der Kopf besitzt. Vorzugsweise weisen die Verbindungselemente eine Rotationssymmetrie um die Längsachse des Körpers auf. Dies trifft zumindest auf den Körper selbst zu, der bevorzugt einen kreisförmigen Querschnitt aufweist. Sie entsprechen somit in ihrer äußeren Form herkömmlichen Bolzen bzw. Schrauben. In einer weiteren Ausführungsform weisen die Verbindungselemente einen rautenförmigen Querschnitt auf, dessen größte Ausdehnung in Belastungsrichtung liegt. Dies vermeidet vorteilhaft eine starke Faserumlenkung und die damit einhergehenden Aufziehspannungen an den Flanken des Verbindungselementes (durch das Ausrichten der Fasern unter Last) wird verringert, da das Loch durch das Verbindungselement belastungsorientiert verfüllt wird.

An dem Ende des erfindungsgemäßen Verbindungselements, das dem Kopf abgewandt ist, ist eine Spitze angeordnet, die das Durchdringen der Faserlagen des Faserverbundbauteils im trockenen oder matrixgetränkten, unkonsolidierten Zustand unterstützt. Das metallische Verbindungsstück weist Öffnungen zur Durchführung des Körpers des Verbindungselementes auf oder ist selbst Kopf eines oder mehrerer Verbindungselemente. In dem Bereich, der mit dem Matrixmaterial des Faserverbundbauteils, mindestens jedoch in dem Bereich, der mit den Verstärkungsfasern des Faserverbundbauteils in Berührung kommt, weist das erfindungsgemäße Verbindungselement eine Umhüllung auf.

Bevorzugt sind die Verbindungselemente (Schrauben, Bolzen) selbst als Dorne ausgebildet und müssen daher nach dem erfolgreichen Durchdringen der Faserlagen nicht entfernt werden. In einer ersten einfachen Ausführungsform sind dabei die Verbindungselemente an der Seite, die durch die Faserlagen dringt, zugespitzt ausgeführt.

Die Erfindung sieht vor, dass die zugespitzte Ausführung der Verbindungselemente durch eine abnehmbare Spitze realisiert wird. Die abnehmbare Spitze kann dabei entweder auf einen Außengewindeabschnitt an dem Ende des Verbindungselementes, mit dem die Faserlagen durchdrungen werden, aufgeschraubt sein oder die abnehmbare Spitze ist in einer axialen Öffnung an dem Ende des Verbindungselementes, mit dem die Faserlagen durchdrungen werden, eingesetzt oder eingeschraubt. Wenn die Spitze in die axiale Öffnung lediglich eingesetzt ist, kann sie durch eine magnetische Verbindung, einen Federring oder Ähnliches in ihrer Position gehalten werden.

Eine vorteilhafte Weiterbildung sieht vor, dass die Spitze, falls eine Schraubverbindung zu dem Verbindungselement vorliegt, an mindestens zwei gegenüberliegenden Seiten abgeflacht ist, um das Ansetzen eines Schraubenschlüssels, bevorzugt eines Maulschlüssels, zur Montage bzw. Demontage zu ermöglichen. Der Übergang von der Abflachung zum weiteren Verlauf der abnehmbaren Spitze in Richtung des Verbindungselementes ist bevorzugt gerundet ausgeführt, damit die Fasern beim Durchdringen der Lagen auch in diesem Bereich abgleiten können.

In einer bevorzugten Vorgehensweise sollen die Gewindegänge von Schrauben geschützt werden, d.h. es soll vermieden werden, dass sich die Gewindegänge mit Harz füllen. Dazu werden sowohl die Gewindegänge als auch die den Dorn ausbildenden Umhüllungen mit geeigneten Trennmitteln versehen.

Vorzugsweise wird beim Durchstoßen der Faserlagen die Oberfläche des Verbindungselementes mit einem reibungsreduzierenden Mittel beschichtet.

Bevorzugt werden die Verbindungselemente beim Durchdringen der Faserlagen, insbesondere bei Kohlefasern, mit einer Oberflächenbeschichtung versehen, die einen direkten, elektrisch leitfähigen Kontakt zwischen dem Material der Verbindungselemente und den Kohlenstoffasern unterbindet oder zumindest stark reduziert. Das reibungsreduzierende Mittel und die Oberflächenbeschichtung können identisch sein, falls das gewählte Material die notwendigen Eigenschaften aufweist. Derartige Materialien sind aus dem Stand der Technik bekannt.

Verbindungselemente können nachteilig beim Durchdringen an Fasern hängen bleiben und deren Bruch verursachen, insbesondere, wenn sie mit einem Außengewinde versehen sind. Vorteilhaft weisen daher die Verbindungselemente eine Umhüllung auf. Diese ist vorzugsweise in der Art einer zumindest am Körper der Verbindungselemente eng anliegenden Röhre mit glatter Außenwandung ausgeführt. Bei mit einem Außengewinde versehenen Verbindungselement-Körpern kann diese Umhüllung auch aufgeschraubt sein. In einer bevorzugten Verfahrensweise wird diese Umhüllung nach dem Durchdringen der Faserlagen abgezogen bzw. abgeschraubt und entnommen, so dass sie nicht im Ringanker verbleibt. Eine weitere bevorzugte Ausführungsform sieht vor, dass die Umhüllung im Ringanker verbleibt und im Zuge der Tränkung mit Matrixmaterial und anschließender Konsolidierung in die Matrix mit eingebunden wird.

In einer bevorzugten Ausführungsform ist die Umhüllung nicht auf den Körper des Verbindungselements aufgeschraubt, jedoch über die gesamte, mit dem Faserverbundmaterial in Verbindung stehende Länge des Verbindungselementes ausgeführt. So ist es vorteilhaft möglich, die übrigen Teile des Verbindungselements aus der Umhüllung heraus zu ziehen und eine Wechselbarkeit des Verbindungselementes bzw. die Austauschbarkeit des vom Verbindungselement gehaltenen Verbindungsstückes zu ermöglichen.

Auch zur Verhinderung des elektrisch leitenden Kontakts zwischen metallischem Material von Bestandteilen des Verbindungselementes und der Kohlefaserverstärkung kann die Umhüllung vorteilhaft genutzt werden. Die Umhüllung überdeckt dabei mindestens den Teil des Verbindungselementes, der mit dem Verstärkungsfasermaterial in Verbindung kommt, optional den gesamten mit Matrixmaterial in Kontakt tretenden Abschnitt des Verbindungselementes.

Die Spitze steht in ihrer Umfangsrichtung vorzugsweise soweit über den Querschnitt des Verbindungselement-Körpers über, dass ein stufenloser Abschnitt mit der Umhüllung gebildet wird. Dies vermeidet das Hängenbleiben von Fasern an der Kante der Umhüllung,

Bevorzugt besteht die Umhüllung aus einem Kunststoffmaterial, besonders bevorzugt aus demselben Material, das als Matrixmaterial zum Einsatz kommt. Es ist aber auch möglich, ein geeignetes Thermoplast oder einen anderen Kunststoff einzusetzen, das nicht chemisch durch das Matrixmaterial angegriffen wird.

Auch eine Beschichtung aus Matrixmaterial auf den Verbindungselementen ist möglich. Diese ist dann auf den Abschnitt des Verbindungselementes beschränkt, der im montierten Zustand innerhalb des Ringankers verläuft.

Eine vorteilhafte Weiterbildung der Umhüllung sieht vor, dass diese durchbrochen ist, um das Eindringen von Matrixmaterial bis direkt zum Verbindungselement-Körper zu ermöglichen. Diese Durchbrüche sind bevorzugt achsenparallel zum Körper des Verbindungselementes verlaufende längliche Öffnungen, bevorzugt über annähernd die gesamte Länge der Umhüllung oder auch als kreisförmig oder ellipsenförmig (vorzugsweise große Halbachse der Ellipse parallel zur Längsachse des Verbindungselementes) ausgeführt. Vorzugsweise sind dabei jedoch Kanten zu vermeiden (bzw. abzurunden), an denen die Fasern des Faserverstärkungsmaterials hängen bleiben könnten. Durch die Öffnungen kann Matrixmaterial eindringen, die Fasern des Verstärkungsmaterials überbrücken aufgrund ihrer Biegeradien diese Öffnungen jedoch, ohne Kontakt zum Körper des Verbindungselementes herzustellen.

In einer weiteren vorteilhaften Weiterentwicklung bilden die den Dorn ausbildenden Umhüllungen selbst später im Sinne eines eingebetteten Innengewindes nutzbare Funktionselemente

Nach dem Einbringen der Verbindungselemente und dem Konsolidieren des Matrixmaterials des Ringankers (dies erfolgt optional gemeinsam mit dem Konsolidieren der äußeren Hülle) werden die Verbindungselemente fixiert. Dies erfolgt bevorzugt, indem diese auf der dem Kopf der Verbindungselemente gegenüberliegenden Seite eine Mutter aufgeschraubt wird oder das herausstehende Ende vernietet wird.

Auch wenn die erfindungsgemäßen Verbindungselemente für den Einsatz an Kohlefaserverbundwerkstoffen entwickelt wurden, ist der Einsatz mit anderen Faserverbundwerkstoffen, insbesondere glasfaserverstärkten Kunststoffen, ohne weiteres möglich. Vorteilhaft ist eine Verwendung zur Verbindung von Bauteilen aus verschiedenen Materialien (bspw. Glas, Holz, Metall, Faserverbundwerkstoffen, Kunststoffen ohne Faserverstärkung, keramischen oder mineralischen Stoffen etc.) mit Bauteilen aus Faserverbundmaterial möglich.

Die folgenden Figuren erläutern beispielhaft die erfindungsgemäßen Verbindungselemente in ihrer bevorzugten Verwendung zur Anbindung von Verbindungsstücken an einen Ringanker für Kopfmodule von Schienenfahrzeugen.

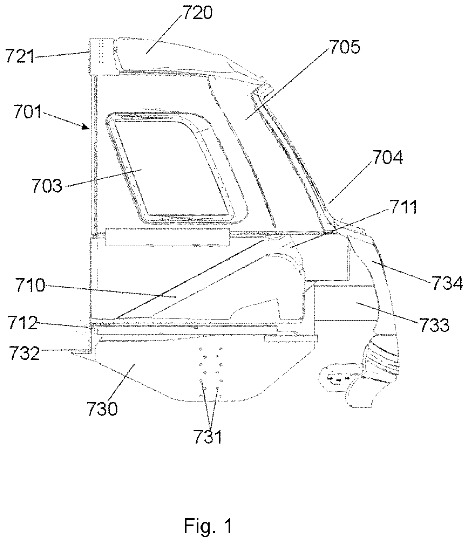

**Fig. 1** zeigt schematisch eine Seitenansicht der Kabine ohne die äußere Schale. Auch die Mittelpufferkupplung wurde aus Übersichtlichkeitsgründen weggelassen. Die innere Schale 701 ist zweiteilig ausgeführt. Die Teilung erfolgt in horizontaler Ebene oberhalb der Brüstungsverstärkung 711. Der obere Teil der inneren Schale 701 weist die Öffnung 704 für die Frontscheibe und die Seitenscheiben 703 auf. Die Fensteröffnungen sind durch die A-Säule 705 voneinander getrennt. Oberhalb des oberen Teils der inneren Schale ist der Ringanker 720 dargestellt. Dieser wird über das Verbindungsstück 721 lösbar an den oberen Längsträgern des nachfolgenden Wagenteils (nicht dargestellt) befestigt.

In den unteren Teil der inneren Schale sind die Brüstungsverstärkung 711 und die UD-Gurte 710 integriert, die die Kraft von der Brüstungsverstärkung 711 auf die Einleitpunkte 712 in die unteren Längsträger des nachfolgenden Wagenteils übertragen.

Unterhalb des unteren Teils der inneren Schale verläuft das untere Crash-Durchleitungselement 730. An der Frontseite der Kabine ist die Platte 734 dargestellt. Dieser nachgeordnet ist die Crash-Box 733. Im Crash-Falle erfolgt der Aufprall auf der Platte 734, die die Kraft an die Crash-Box 733 weitergibt und dort weitestgehend abbaut. Verbliebene Stoßenergie wird in das untere Crash-Durchleitungselement 730 weitergeleitet und dort am Befestigungspunkt 732 in die Untergestellstütze des nachfolgenden Wagenteils übergeben. Im horizontalen Teil des unteren Crash-Durchleitungselementes 730 sind die Öffnungen 731 zur Befestigung der Mittelpufferkupplung erkennbar.

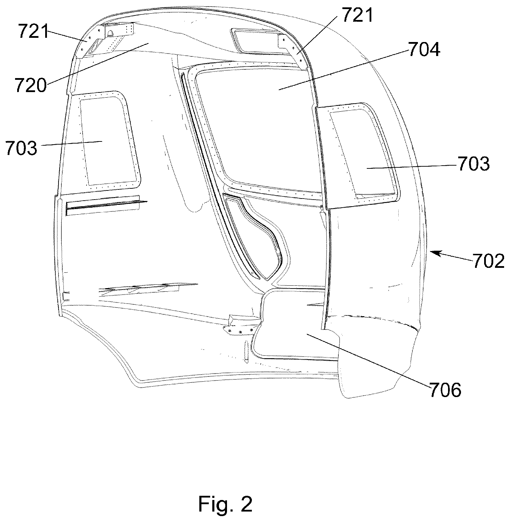

**Fig. 2** zeigt schematisch in einer dreidimensionalen Ansicht die äußere Schale 702. Insbesondere ist zu erkennen, wie sich der obere Ringanker 720 mit seinen Verbindungsstücken 721 in die äußere Schale 702 einfügt. Auch die Öffnung für die Abdeckklappe 706 der Mittelpufferkupplung ist dargestellt.

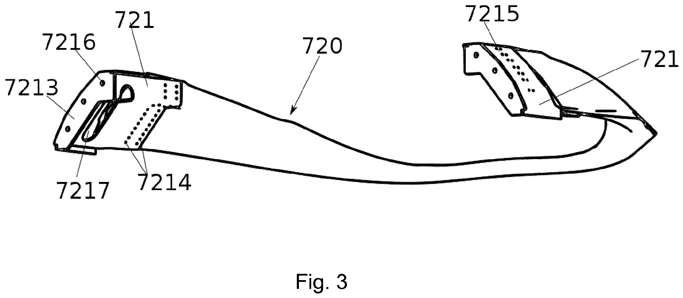

**Fig. 3** zeigt schematisch den Aufbau des Ringankers 720 mit den beiden Verbindungsstücken 721. Die Verbindungsstücke 721 sind über Verbindungselemente (nicht dargestellt) durch die Öffnungen 7214 mit dem Ringanker verbunden. Sie weisen die Montageöffnungen 7217 auf, durch die der Ringanker über die Verbindungsstücke 721 und das Frontteilstück 7213 mit dem nachfolgenden Wagenteil verbunden wird. Dazu werden durch die Öffnungen 7216 Verbindungselemente (nicht dargestellt), insbesondere Schrauben, geführt, die durch die Montageöffnung 7217 festgezogen werden können. Die Öffnungen 7215 erlauben optional eine Verschraubung mit der äußeren Schale.

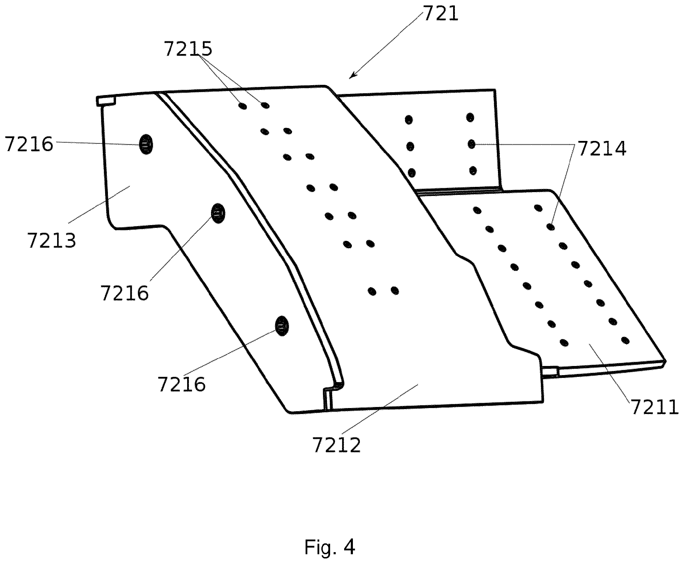

**Fig. 4** zeigt schematisch eine Ausführungsform des Verbindungsstücks 721. Dieses Verbindungsstück weist ein unteres Teilstück 7211, ein oberes Teilstück 7212 und das Frontteilstück 7213 auf. Die Teilstücke bestehen aus Stahl und sind mittels Schweißverbindungen untereinander fixiert.

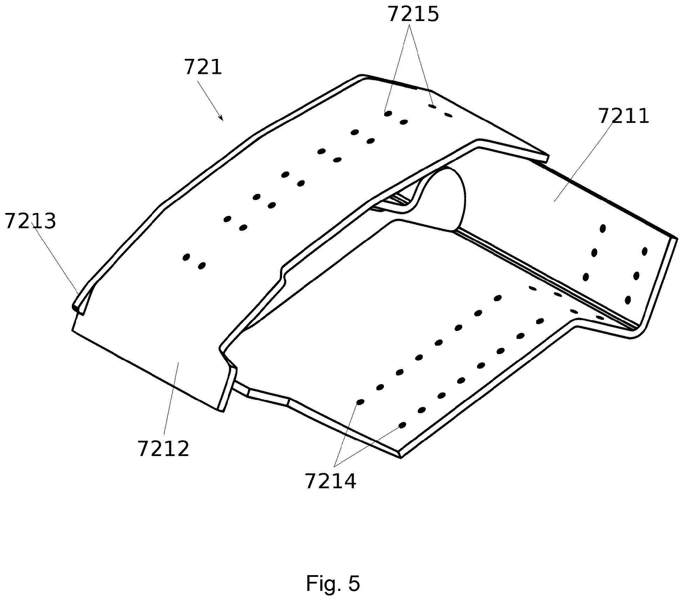

**Fig. 5** zeigt schematisch das Verbindungsstück nach Fig. 4 aus einer anderen Perspektive.

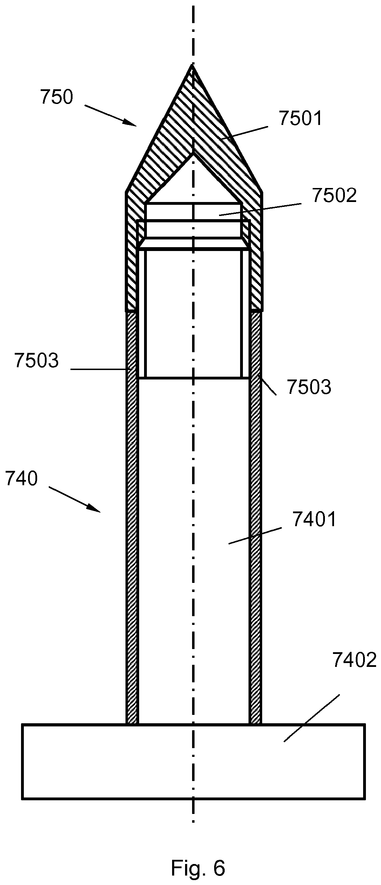

**Fig. 6** zeigt schematisch eine Ausführungsform für ein Verbindungselement 740 im Schnitt entlang der Längsachse. Das Verbindungselement hat Schraubenform und besteht aus einem Kopfteil 7402 und einem Körper 7401. Es weist in dem Teil, der nach der Montage mit dem Matrixmaterial in Verbindung kommt, kein Gewinde auf. Dort ist die Umhüllung 7503 angeordnet, die einen direkten Kontakt der metallischen Bestandteile des Verbindungselementes mit der Verstärkungsfaserstruktur verhindert. Die Umhüllung 7503 verbleibt im fertig konsolidierten und montierten Ringanker. Die Spitze 751 weist einen zugespitzten Teil 7501 auf, der auf dem Gewinde 7502 aufgeschraubt ist. Nach dem Konsolidieren des Faserverbundmaterials wird die Spitze abgeschraubt und die Mutter zur Fixierung des Verbindungselementes, optional mit Unterlegung einer Unterlegscheibe oder eines weiteren Teilstücks des Verbindungsstücks, auf dem Gewinde 7502 aufgeschraubt.

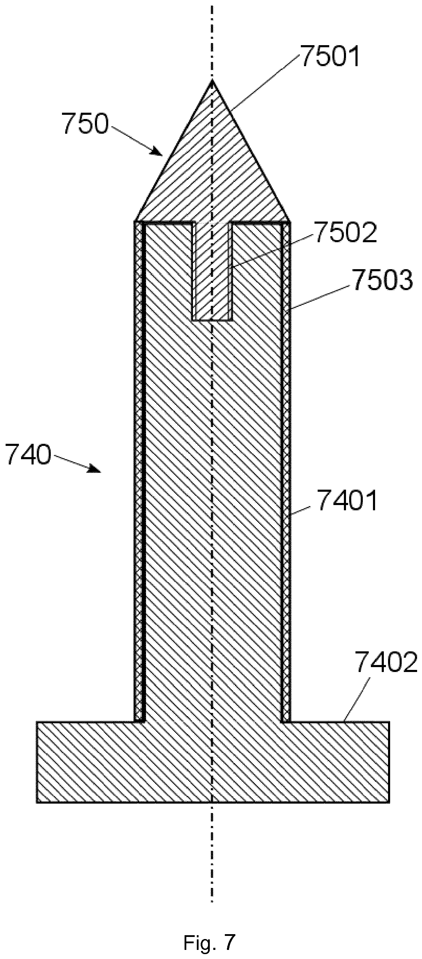

**Fig. 7** zeigt schematisch eine alternative Ausführungsform zu Fig. 6. Hier wird die Spitze 750 mittels eines Innengewindes 7502 am oberen Ende des Bolzens 740 gehalten.

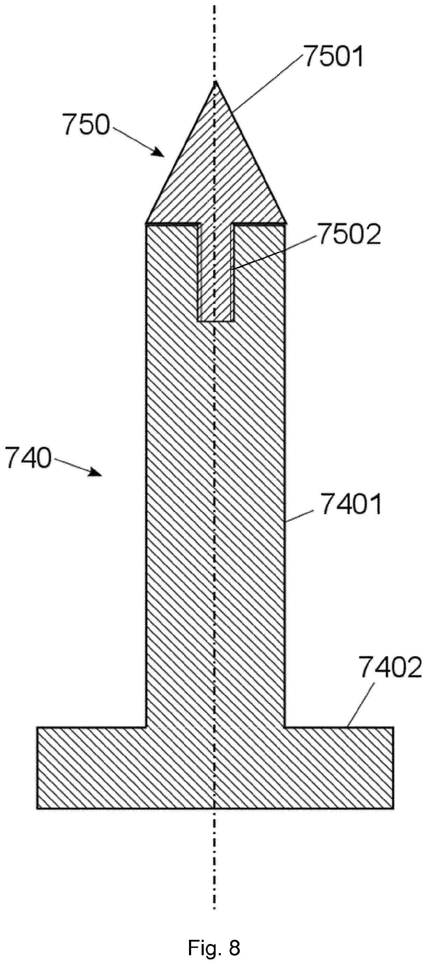

**Fig. 8** zeigt die Ausführungsform nach Fig. 7 jedoch ohne zusätzliche Umhüllung.

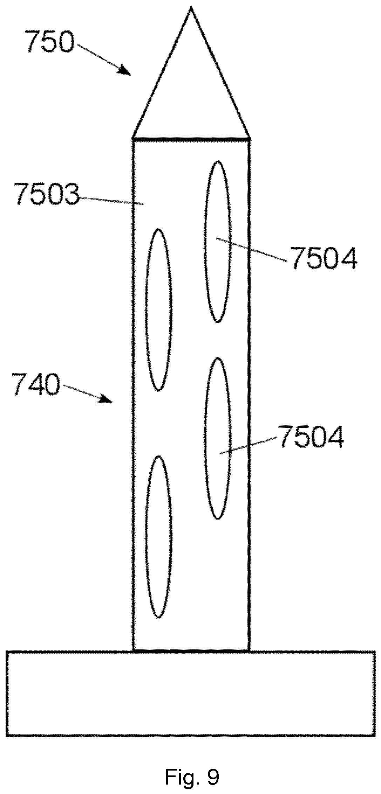

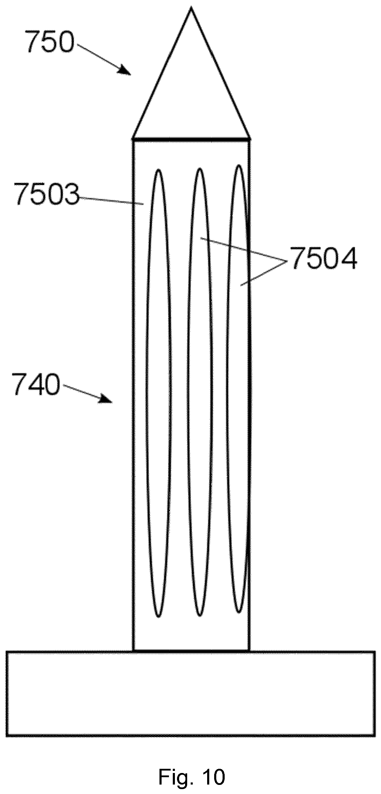

**Fig. 9** und **Fig. 10** zeigen schematisch zwei Varianten von Durchbrüchen 7504 in der Umhüllung 7503.

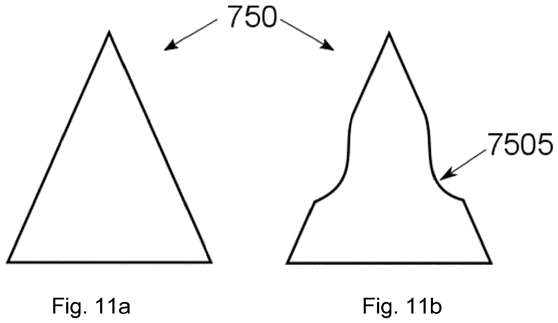

**Fig. 11a** und **Fig. 11b** zeigen schematisch eine Spitze in Frontalansicht (Fig. 11a) und nach einer Drehung um 90° um die Längsachse (Fig. 11b). So wird die seitliche Abflachung 7505 erkennbar, die es gestattet, einen Schraubenschlüssel zur Montage bzw. Demontage der Spitze 750 auf dem Verbindungselement einzusetzen.

### Bezugszeichenliste

- 701: innere Schale
- 702: äußere Schale
- 703: Seitenfensteröffnung
- 704: Frontfensteröffnung
- 705: A-Säule
- 706: Abdeckklappe der Mittelpufferkupplung
- 707: Inneneinbauten

- 710: UD-Gurt der Brüstungsverstärkung
- 711: Brüstungsverstärkung
- 712: Einleitpunkt der Kräfte von der Brüstungsverstärkung in den unteren Längsträger des nachfolgenden Wagens

- 720: Ringanker
- 721: Verbindungsstück
- 7211: Unteres Teilstück
- 7212: Oberes Teilstück
- 7213: Frontteilstück
- 7214: Öffnungen
- 7215: Öffnungen
- 7216: Öffnungen
- 7217: Montageöffnungen

- 730: unteres Crash-Durchleitungselement
- 7301: Abschnitt des Crash-Durchleitungselement von der Crash-Box zum horizontalen Teil
- 7302: horizontaler Teil
- 7303: Abschnitt des Crash-Durchleitungselement vom horizontalen Teil zum Befestigungselement an der Untergestellstütze
- 731: Bohrungen zur Befestigung der Mittelpufferkupplung
- 732: Befestigungsvorrichtung des unteren Crash-Elements an der Untergestellstütze
- 733: Crash-Box
- 734: Platte
- 740: Verbindungsbolzen zur Befestigung des Verbindungsstücks am Ringanker
- 7401: Bolzenkörper
- 7402: Bolzenkopf

- 750: Spitze zur Unterstützung der Durchdringung des Faserverstärkungsmaterials
- 7501: zugespitzter Teil
- 7502: Gewinde
- 7503: Umhüllung des Verbindungsbolzens
- 7504: Durchbrüche in der Umhüllung des Verbindungsbolzens

- 7505: Abflachung der Spitze

## Patentansprüche

1. Verbindungselement zur Befestigung von Verbindungsstücken (721) an Faserverbundbauteilen aus mindestens einer Faserlage und Matrixmaterial, mit einer schrauben- oder bolzenartigen Form mit einem Kopf (7402) und einem Körper (7401), wobei der Körper (7401) eine längserstreckte Form mit einem geringeren Querschnitt als der Kopf (7402) aufweist, und an dem Ende, das dem Kopf (7402) abgewandt ist, eine Spitze (750) angeordnet ist, die ausgebildet ist, das Durchdringen der Faserlagen des Faserverbundbauteils im trockenen oder matrixgetränkten, unkonsolidierten Zustand zu unterstützen, wobei das Verbindungselement (740) dazu ausgebildet ist, durch Öffnungen (7216) des Verbindungsstückes (721) durchgeführt zu werden oder wobei der Kopf (7401) des Verbindungselementes (740) als Verbindungsstück (721) ausgebildet ist, und wobei das Verbindungselement (740) in dem Bereich, der ausgebildet ist, mit dem Matrixmaterial des Faserverbundbauteils in Berührung zu kommen, mindestens jedoch in dem Bereich, der ausgebildet ist, mit den Verstärkungsfasern des Faserverbundbauteils in Berührung zu kommen, eine Umhüllung (7503) aufweist,
**dadurch gekennzeichnet, dass**
die Spitze (750) Abflachungen (7505) aufweist, die das Ansetzen eines Schraubenschlüssels zur Montage oder Demontage der Spitze (750) auf dem Verbindungselement (740) erleichtern.

2. Verbindungsstruktur zur Befestigung an Faserverbundbauteilen aus mindestens einer Faserlage und Matrixmaterial, aufweisend ein Verbindungsstück (721) und ein Verbindungselement (740) mit einer schrauben- oder bolzenartigen Form mit einem Kopf (7402) und einem Körper (7401), wobei der Körper (7401) eine längserstreckte Form mit einem geringeren Querschnitt als der Kopf (7402) aufweist, und an dem Ende, das dem Kopf (7402) abgewandt ist, eine Spitze (750) angeordnet ist, die ausgebildet ist, das Durchdringen der Faserlagen des Faserverbundbauteils im trockenen oder matrixgetränkten, unkonsolidierten Zustand zu unterstützen, wobei das Verbindungsstück (721) Öffnungen (7216) zur Durchführung des Körpers (7401) des Verbindungselementes (740) aufweist oder selbst als Kopf (7401) eines oder mehrerer Verbindungselemente (740) ausgebildet ist, wobei das Verbindungselement (740) in dem Bereich, der ausgebildet ist, mit dem Matrixmaterial des Faserverbundbauteils in Berührung zu kommen, mindestens jedoch in dem Bereich, der ausgebildet ist, mit den Verstärkungsfasern des Faserverbundbauteils in Berührung zu kommen, eine Umhüllung (7503) aufweist,
wobei die Spitze (750) Abflachungen (7505) aufweist, die das Ansetzen eines Schraubenschlüssels zur Montage oder Demontage der Spitze (750) auf dem Verbindungselement (740) erleichtern.

3. Verbindungselement nach Anspruch 1,
**dadurch gekennzeichnet, dass** die Spitze (750) auf ein Außengewinde des Verbindungselementes (740) aufgeschraubt ist.

4. Verbindungselement nach Anspruch 1,
**dadurch gekennzeichnet, dass** die Spitze (750) auf ein Innengewinde des Verbindungselementes (740), das am Ende des Verbindungselements (740) axial angeordnet ist, aufgeschraubt ist.

5. Verbindungselement nach Anspruch 1,
**dadurch gekennzeichnet, dass** die Spitze (750) in eine Öffnung des Verbindungselementes (740), die am Ende des Verbindungselements (740) axial angeordnet ist, eingesteckt ist.

6. Verwendung einer Verbindungsstruktur nach Anspruch 2, **dadurch gekennzeichnet, dass** die Umhüllung (7503) nach dem Durchdringen der Faserlagen und vor dem Konsolidieren aus dem Faserverbundbauteil entfernt wird oder dass die Umhüllung (7503) im Faserverbundbauteil verbleibt.

7. Verbindungseiement nach einem der Ansprüche 1 oder 3 bis 5 **dadurch gekennzeichnet, dass** die Umhüllung (7503) Durchbrüche (7504) aufweist, die den Eintritt von Matrixmaterial bis zur Oberfläche des Verbindungselementes (740) ermöglichen.

8. Verbindungsstruktur nach Anspruch 2, **dadurch gekennzeichnet, dass** die Breite der Durchbrüche (7504) senkrecht zu Längsachse des Verbindungselementes (740) so gering ist, dass die Verstärkungsfasern die Durchbrüche (7504) überbrücken und aufgrund ihres Biegeradius' die Materialoberfläche des Verbindungselementes (740) nicht erreichen.

9. Verwendung eines Verbindungselementes nach einem der Ansprüche 1, 3 bis 5 oder 7 zur Fixierung eines metallischen Verbindungsstückes (721) an einem Ringanker aus Faserverbundmaterial für ein Kopfmodul eines Schienenfahrzeugs, wobei das Verbindungselement (740) bei der Herstellung des Ringankers (720) durch dafür vorgesehene Öffnungen des Verbindungsstückes (721) und durch die trockenen oder matrixgetränkten, unkonsolidierten Faserlagen des Ringankers (720) geführt wird.

10. Verwendung eines Verbindungselementes nach einem der Ansprüche 1, 3 bis 5 oder 7 zur Fixierung eines metallischen Verbindungsstückes (721) an einem Ringanker (720) aus Faserverbundmaterial für ein Kopfmodul eines Schienenfahrzeugs, wobei mindestens ein Verbindungselement (740) auf dem Verbindungsstück (721) angeordnet ist und durch die trockenen oder matrixgetränkten, unkonsolidierten Faserlagen des Ringankers (720) geführt und auf der dem Verbindungsstück (721) gegenüberliegenden Seite des Ringankers (720) fixiert wird.

11. Verwendung eines Verbindungselementes nach einem der Ansprüche 1, 3 bis 5 oder 7 zur Fixierung eines Bauteils aus Glas, Holz, Metall, Faserverbundwerkstoffen, Kunststoffen ohne Faserverstärkung, keramischen oder mineralischen Stoffen an einem Bauteil aus Faserverbundmaterial.

## Claims

1. A connecting element for fixing connection pieces (721) to fiber composite components made up of at least one fiber ply and matrix material, having a screw- or bolt-like shape with a head (7402) and a body (7401), wherein the body (7401) has an elongated shape with a smaller cross section than the head (7402), and wherein, at the end facing away from the head (7402), a tip (750) is arranged that is configured to assist the penetration of the fiber plies of the fiber composite component in the dry state or unconsolidated state impregnated with matrix, wherein the connecting element (740) is configured to be passed through openings (7216) of the connection piece (721) or wherein the head (7401) of the connecting element (740) is configured as a connection piece (721), and wherein the connecting element (740) has a casing (7503) in the area configured come into contact with the matrix material of the fiber composite component, but at least in the area configured to come into contact with the reinforcing fibers of the fiber composite component,
**characterized in that**
the tip (750) has flat areas (7505) which facilitate the application of a spanner for installation or uninstallation of the tip (750) on the connecting element (740).

2. A connecting structure for fixing to fiber composite components made up of at least one fiber ply and matrix material, having a connection piece (721) and a connecting element (740) having a screw- or bolt-like shape with a head (7402) and a body (7401), wherein the body (7401) has an elongated shape with a smaller cross section than the head (7402), and wherein, at the end facing away from the head (7402), a tip (750) is arranged that is configured to assist the penetration of the fiber plies of the fiber composite component in the dry state or unconsolidated state impregnated with matrix, wherein the connection piece (721) has openings (7216) for passing the body (7401) of the connecting element (740) therethrough or is itself configured as the head (7401) of one or more connecting elements (740), wherein the connecting element (740) has a casing (7503) in the area configured come into contact with the matrix material of the fiber composite component, but at least in the area configured to come into contact with the reinforcing fibers of the fiber composite component,
wherein
the tip (750) has flat areas (7505) which facilitate the application of a spanner for installation or uninstallation of the tip (750) on the connecting element (740).

3. The connecting element according to claim 1, **characterized in that** the tip (750) is screwed onto an external thread of the connecting element (740).

4. The connecting element according to claim 1, **characterized in that** the tip (750) is screwed onto an internal thread of the connecting element (740) which is arranged axially at the end of the connecting element (740).

5. The connecting element according to claim 1, **characterized in that** the tip (750) is inserted into an opening of the connecting element (740) which is arranged axially at the end of the connecting element (740).

6. Use of a connecting structure according to claim 2, **characterized in that** the casing (7503) is removed from the fiber composite component after penetration of the fiber plies and before consolidation, or **in that** the casing (7503) remains in the fiber composite component.

7. The connecting element according to any of claims 1 or 3 to 5, **characterized in that** the casing (7503) has perforations (7504) which allow matrix material to enter as far as the surface of the connecting element (740).

8. The connecting structure according to claim 2, **characterized in that** the width of the perforations (7504) perpendicular to the longitudinal axis of the connecting element (740) is so small that the reinforcing fibers bridge the perforations (7504) and, due to their bending radius, do not reach the material surface of the connecting element (740).

9. Use of a connecting element according to any of claims 1, 3 to 5 or 7 for fixing a metallic connection piece (721) to a ring beam made of fiber composite material for a head module of a rail vehicle, wherein, during the production of the ring beam (720), the connecting element (740) is fed through openings of the connection piece (721) provided for this and through the dry fiber plies or unconsolidated fiber plies, impregnated with matrix, of the ring beam (720).

10. Use of a connecting element according to any of claims 1, 3 to 5 or 7 for fixing a metallic connection piece (721) to a ring beam (720) made of fiber composite material for a head module of a rail vehicle, wherein at least one connecting element (740) is arranged on the connection piece (721) and is fed through the dry fiber plies or unconsolidated fiber plies, impregnated with matrix, of the ring beam (720), and is fixed on the side of the ring beam (720) opposite the connection piece (721).

11. Use of a connecting element according to any of claims 1, 3 to 5 or 7 for fixing a component made of glass, wood, metal, fiber composite materials, plastics without fiber reinforcement, ceramic or mineral substances to a component made of fiber composite material.

## Revendications

1. Élément de raccordement pour la fixation de pièces de raccordement (721) à des composants composites de fibres constitués d'au moins une couche de fibres et d'un matériau de matrice, présentant une forme de vis ou de boulon avec une tête (7402) et un corps (7401), le corps (7401) présentant une forme allongée avec une section transversale inférieure à celle de la tête (7402), et une pointe (750) étant agencée à l'extrémité détournée de la tête (7402) et étant réalisée de manière à supporter le passage des couches de fibres du composant composite de fibres à l'état sec ou imprégné de matrice non consolidé, l'élément de raccordement (740) étant réalisé de manière à être guidé à travers des orifices (7216) de la pièce de raccordement (721), ou la tête (7401) de l'élément de raccordement (740) étant réalisée sous forme de pièce de raccordement (721), et l'élément de raccordement (740) présentant une enveloppe (7503) dans la zone réalisée de manière à entrer en contact avec le matériau de matrice du composant composite de fibres, mais au moins dans la zone réalisée de manière à entrer en contact avec les fibres de renforcement du composant composite de fibres,
**caractérisé en ce que**
la pointe (750) présente des méplats (7505) qui facilitent l'application d'une clé pour le montage ou le démontage de la pointe (750) sur l'élément de raccordement (740).

2. Structure de raccordement pour la fixation à des composants composites de fibres constitués d'au moins une couche de fibres et d'un matériau de matrice, présentant une pièce de raccordement (721) et un élément de raccordement (740) présentant une forme de vis ou de boulon avec une tête (7402) et un corps (7401), le corps (7401) présentant une forme allongée avec une section transversale inférieure à celle de la tête (7402), et une pointe (750) étant agencée à l'extrémité détournée de la tête (7402) et étant réalisée de manière à supporter le passage des couches de fibres du composant composite de fibres à l'état sec ou imprégné de matrice non consolidé, la pièce de raccordement (721) présentant des orifices (7216) pour le passage du corps (7401) de l'élément de raccordement (740) ou étant elle-même réalisée sous forme de tête (7401) d'un ou de plusieurs éléments de raccordement (740), l'élément de raccordement (740) présentant une enveloppe (7503) dans la zone réalisée de manière à entrer en contact avec le matériau de matrice du composant composite de fibres, mais au moins dans la zone réalisée de manière à entrer en contact avec les fibres de renforcement du composant composite de fibres,
**caractérisé en ce que**
la pointe (750) présente des méplats (7505) qui facilitent l'application d'une clé pour le montage ou le démontage de la pointe (750) sur l'élément de raccordement (740).

3. Élément de raccordement selon la revendication 1, **caractérisé en ce que** la pointe (750) est vissée sur un filetage de l'élément de raccordement (740).

4. Élément de raccordement selon la revendication 1, **caractérisé en ce que** la pointe (750) est vissée sur un taraudage de l'élément de raccordement (740) agencé axialement à l'extrémité de l'élément de raccordement (740).

5. Élément de raccordement selon la revendication 1, **caractérisé en ce que** la pointe (750) est insérée dans un orifice de l'élément de raccordement (740) agencé axialement à l'extrémité de l'élément de raccordement (740).

6. Utilisation d'une structure de raccordement selon la revendication 2, **caractérisé en ce que** l'enveloppe (7503) est retirée du composant composite de fibres après le passage des couches de fibres et avant la consolidation, ou **en ce que** l'enveloppe (7503) reste dans le composant composite de fibres.

7. Élément de raccordement selon l'une des revendications 1 ou 3 à 5, **caractérisé en ce que** l'enveloppe (7503) présente des perforations (7504) permettant l'entrée de matériau de matrice jusqu'à la surface de l'élément de raccordement (740).

8. Structure de raccordement selon la revendication 2, **caractérisée en ce que** la largeur des perforations (7504) perpendiculairement à l'axe longitudinal de l'élément de raccordement (740) est si faible que les fibres de renforcement pontent les perforations (7504) et n'atteignent pas la surface du matériau de l'élément de raccordement (740) en raison de leur rayon de courbure.

9. Utilisation d'un élément de raccordement selon l'une des revendications 1, 3 à 5 ou 7 pour la fixation d'une pièce de raccordement métallique (721) sur une ancre en anneau en un matériau composite de fibres pour un module de tête d'un véhicule sur rails, l'élément de raccordement (740), lors de la fabrication de l'ancre en anneau (720), étant guidé à travers des orifices prévus à cet effet de la pièce de raccordement (721) et à travers les couches de fibres sèches ou imprégnées de matrice non consolidées de l'ancre en anneau (720).

10. Utilisation d'un élément de raccordement selon l'une des revendications 1, 3 à 5 ou 7 pour la fixation d'une pièce de raccordement métallique (721) sur une ancre en anneau (720) en un matériau composite de fibres pour un module de tête d'un véhicule sur rails, au moins un élément de raccordement (740) étant agencé sur la pièce de raccordement (721) et étant guidé à travers les couches de fibres sèches ou imprégnées de matrice non consolidées de l'ancre en anneau (720) et étant fixé du côté de l'ancre en anneau (720) opposé à la pièce de raccordement (721).

11. Utilisation d'un élément de raccordement selon l'une des revendications 1, 3 à 5 ou 7 pour la fixation d'un composant en verre, en bois, en métal, en matériaux composites de fibres, en matières plastiques non renforcées par des fibres, en matières céramiques ou minérales sur un composant en matériau composite de fibres.
